# EUROPEAN PATENT APPLICATION

(11) **EP 4 844 636 A1**
(43) Date of publication of application: **25.11.2026**
(21) Application number: 25305748.3
(22) Date of filing: 23.05.2025
(51) Int. Cl.: G06N 3/067, G06N 3/044, G06N 3/045

(54) **RECIRCULATING OPTICAL SYSTEM FOR PERFORMING RESERVOIR COMPUTING**

(71) Applicant: Université Bourgogne Europe, 21000 Dijon (FR); Université de Technologie de Belfort-Montbéliard, 90010 Belfort Cedex (FR); Centre National de la Recherche Scientifique, 75016 Paris (FR)
(72) Inventor: COLMAN, Pierre, DIJON (FR); SHEVELEVA, Anastasiia, RENNES (FR)
(74) Representative: Bandpay & Greuter

(57) **Abstract**

The disclosure notably relates to a recirculating optical system for performing reservoir computing. The recirculating optical system comprises at least one reservoir (100, 200, 300). Each reservoir comprises at least two ports (101, 102, 201, 202, 203, 204, 301, 302) and a set of wave guides connecting the at least two ports. The set of wave guides is arranged to form an interaction area (130, 230, 330) comprising at least three guides interacting together, and at least one recirculating area (110, 120, 210, 220, 320) comprising at least one curved guide connecting extremities of guides from the interaction area. The recirculating optical system forms an improved solution for performing reservoir computing.

## Description

### TECHNICAL FIELD

The disclosure relates to the field of reservoir computing, and more specifically to a recirculating optical system for performing reservoir computing. It further relates to a method, a computer program, and a device for operating such a recirculating optical system.

### BACKGROUND

Reservoir computing is a computational paradigm inspired by recurrent neural networks, where a fixed, dynamic system (the "reservoir") processes input signals, and a simple, but trained, readout layer extracts the desired output. Optical reservoir computing leverages physical optical systems to implement the reservoir, exploiting the inherent dynamics of light to process information efficiently. Most optical implementations are based on resonant cavities, such as coupled micro-rings.

Major limitations of these micro-ring reservoirs are that, firstly, the resulting performance is not proportional to the system size, as many internal modes remain inaccessible or poorly coupled. Secondly, combining two reservoirs only marginally improves overall performance, since the behavior remains sequential, without mutual interaction or cross-influence. While some recirculating optical systems based on waveguide loops have been proposed, they are generally limited to linear operation and do not support rich, nonlinear dynamics suitable for advanced reservoir computing.

Within this context, there is therefore a need for an improved optical system for performing reservoir computing.

### SUMMARY

It is therefore provided a recirculating optical system for performing reservoir computing. The recirculating optical system comprises at least one reservoir. Each reservoir comprises at least two ports and a set of wave guides connecting the at least two ports. The set of wave guides is arranged to form an interaction area comprising at least three guides interacting together, and at least one recirculating area comprising at least one curved guide connecting extremities of guides from the interaction area.

The system may comprise one or more of the following:
- The arrangement of the set of wave guides connected together results in a formation of optical modes. Each optical mode passes through at least one recirculating area;
- The set of wave guides is arranged to create a bi-directional propagation of light;
- The at least three guides interacting together in the interaction area are configured as guides arranged laterally and/or vertically relative to each other;
- The spacing between each pair of adjacent guides in the interaction area is lower than 3 microns;
- At least one of the at least one recirculating area comprises at least two curved guides interacting together;
- At least one reservoir comprises at least one partially or totally reflective element, for example such as a Bragg reflector;
- The at least one recirculating area comprises:
   ∘ a left recirculation area; and
   ∘ a right recirculation area,
   wherein the interaction area is positioned between the left and right recirculation areas. Each guide of the interaction area has a first end connected to a curved guide of the left recirculation area and a second end connected to a curved guide of the right recirculation area;
- Each recirculation area comprises two curved guides. The interaction area comprises:
   ∘ a first straight guide connecting a first port via the left recirculation area and a first end of a first curved guide in the right recirculation area;
   ∘ a second straight guide connecting a second end of the first curved guide in the right recirculation area and a first end of a first curved guide in the left recirculation area;
   ∘ a third straight guide connecting a second end of the first curved guide in the left recirculation area and a first end of a second curved guide in the right recirculation area;
   ∘ a fourth straight guide connecting a second end of the second curved guide in the right recirculation area and a first end of a second curved guide in the left recirculation area; and
   ∘ a fifth straight guide connecting a second end of the second curved guide in the left recirculation area and a second port via the right recirculation area;
- The left recirculation area comprises a curved guide and the right recirculation area comprises two curved guides. The interaction area comprises:
   ∘ a first straight guide connecting a first port via the left recirculation area and a first end of a first curved guide in the right recirculation area;
   ∘ a second straight guide connecting a second port via the left recirculation area and a first end of a second curved guide of the right recirculation area;
   ∘ a third straight guide connecting a second end of the second curved guide in the right recirculation area and a first end of a first curved guide in the left recirculation area;
   ∘ a fourth straight guide connecting a second end of the first curved guide in the left recirculation area and a second end of the first curved guide in the right recirculation area; and
   ∘ a fifth straight guide connecting a third port via the left recirculation area and a fourth pot via the right recirculation area,
   wherein the first and second curved guides in the right recirculation area interact together;
- The at least one recirculating area consists in a right recirculation area. The interaction area comprises:
   ∘ a first straight guide connecting a first port via a left area and a first end of a first curved guide in the right recirculation area;
   ∘ a second straight guide connecting a second end of the first curved guide in the right recirculation area and a second port via the left area; and
   ∘ a third straight guide having ends connected together as a closed loop by a recirculation guide; and/or
- The optical recirculation system comprises several reservoirs connected in pairs, with the port of one reservoir connected to the port of the other reservoir.

It is further provided a method of use of the recirculating optical system. The method comprises determining an input signal to be supplied to the recirculating optical system. The method comprises supplying the determined input signal as input to the recirculating optical system. The method comprises interpreting a response provided by the recirculating optical system.

It is further provided a computer program comprising instructions which, when the program is executed by a computer, cause the computer to carry out the method.

It is further provided a device comprising a data storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- FIGs. 1 to 3 illustrate examples of reservoirs with various configurations of interaction and recirculation areas;
- FIG. 4 illustrates a conceptual comparison between reservoir computing and neural networks in terms of functional space coverage;
- FIGs. 5 and 6 show spectral and spatial characteristics of different optical architectures, including energy distribution and resonance behavior;
- FIG. 7 shows an optical microscope image of a fabricated structure, showing an example of a right recirculation zone;
- FIG. 8 shows cross-sectional and side views of waveguide arrangements;
- FIG. 9 presents results of nonlinear behavior and hysteresis in the recirculating optical system;
- FIG. 10 illustrates examples of Bragg reflectors;
- FIG. 11 presents a comparison between a conventional micro-ring matrix and a system according to the invention;
- FIG. 12 shows an example of the method of use of the recirculating optical system; and
- FIG. 13 shows an example of the system.

### DETAILED DESCRIPTION

It is proposed a recirculating optical system for performing reservoir computing. The recirculating optical system comprises at least one reservoir. Each reservoir comprises at least two ports and a set of wave guides connecting the at least two ports. The set of wave guides is arranged to form an interaction area comprising at least three guides interacting together, and at least one recirculating area comprising at least one curved guide connecting extremities of guides from the interaction area.

The recirculating optical system forms an improved solution for performing reservoir computing.

Notably, the recirculating optical system solves the limitations of existing optical systems. Indeed, the light propagates bi-directionally through the structure, which would allow cross-influence (i.e. mutual interaction) between two reservoirs. Moreover, every optical mode must, by construction, pass through at least one recirculating area, which prevents the formation of hidden modes localized exclusively in the center of the structure. This allows implementing partial control over the reservoir where every optical mode of the reservoir can be tuned by acting solely on the "recirculating area", which is located at the extremity of said reservoir. The ability to tune the reservoir and not solely the readout layer provides better performances as it increases the functional space that can be covered by the reservoir.

Moreover, the recirculating optical system provides a co-interaction of more than two optical guides at the same time (in the interaction area), thus achieving simultaneous interaction of more than two optical modes. Thus achieving more interaction in the non-linear regime. In particular, the system allows achieving a concurrent operation in reflection and transmission (such mutual interaction does not exist in other existing architectures). This leads to the fact that the behavior of two cascaded reservoirs is fundamentally different from that of each individual reservoir. The optical recirculation system therefore finally allows several reservoirs to be connected together to increase the performance of the resulting system.

It is also provided a method of use of the recirculating optical system. The method is computer-implemented, meaning that at least one or more of its steps are carried out by a computer or a computing system, either fully automatically or with some degree of user interaction.

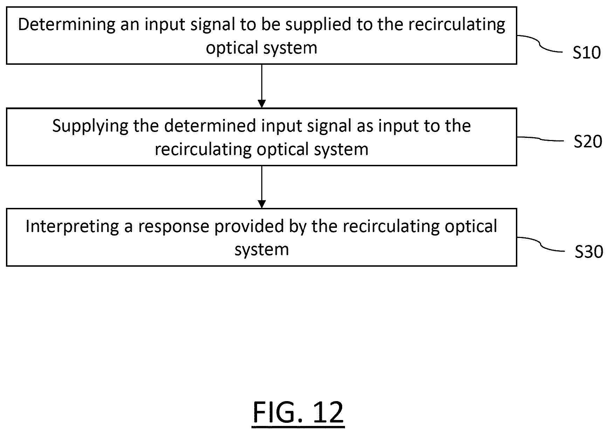

The method of use is now discussed in reference to FIG. 12.

The method comprises determining S10 an input signal to be supplied to the recirculating optical system. This step may include generating the input signal from a dataset, such as a time series, a stream of sensor data, or an image, and pre-processing it to match the requirements of the optical injection interface. The input signal may be encoded, for example, into the amplitude, wavelength, phase, or temporal structure of a modulated light source. In some embodiments, this step is performed entirely by the computer, while in other cases, the user may select or adjust the input through a graphical interface.

The method further comprises supplying S20 the determined input signal as input to the recirculating optical system. The determined input signal is supplied to one or more input ports of one or more reservoirs comprised in the recirculating optical system. In configurations where the system comprises a single reservoir, the input signal may be injected into one or more input ports of that reservoir, and the response may be extracted from one or more output ports of the same reservoir. In configurations where the system comprises two or more reservoirs connected in cascade, the input signal may be supplied to one or more input ports of the first reservoir in the cascade, and the response may be obtained from one or more output ports of the last reservoir in the cascade. The reservoirs may alternatively be interconnected to allow mutual optical interaction. In that case, the one or more input ports and the one or more output ports may be defined as such among the set of ports of all the reservoirs of the system. In all of these configurations, injection of the input signal may be performed using a computer-controlled light source, such as a laser or optical emitter.

The method further comprises interpreting S30 a response provided by the recirculating optical system. The response may be obtained from one or more output ports, which may belong to the same reservoir that received the input signal, or to a different reservoir, depending on the system configuration. The response may be acquired using photodetectors, for example to detect variations in intensity, wavelength, or phase. Alternatively or additionally, the response may be obtained by capturing one or more optical or infrared images of the system after signal injection. Such images may reveal spatial light distribution patterns associated with active resonant modes within the reservoir(s). The one or more images may be analyzed by the computer using image-processing techniques to extract relevant output features for use in downstream tasks.

The extracted response may then be processed by the computer to perform a task such as classification, prediction, or regression using a trained readout model. The readout may be implemented, for example, using a linear transformation, a support vector machine, or a neural network. The method may be configured for different levels of automation. One or more steps may be triggered manually or semiautomatically through user-computer interaction, for example using a graphical interface or software script. The level of automation may be predefined or user-configurable, depending on the application.

In a typical example of computer implementation, the method is performed using a system comprising a processor coupled to a memory and a graphical user interface (GUI). The memory may store a computer program comprising instructions for carrying out the method, and may also store a database. The memory may be any suitable hardware for such storage and may comprise physically distinct units, for example one for the program and another for the database.

By "database", it is meant any collection of data (i.e. information) organized for search and retrieval (e.g. a relational database, e.g. based on a predetermined structured language, e.g. SQL). When stored on a memory, the database allows a rapid search and retrieval by a computer. Databases are indeed structured to facilitate storage, retrieval, modification, and deletion of data in conjunction with various data-processing operations. The database may consist of a file or set of files that can be broken down into records, each of which consists of one or more fields. Fields are the basic units of data storage. Users may retrieve data primarily through queries. Using keywords and sorting commands, users can rapidly search, rearrange, group, and select the field in many records to retrieve or create reports on particular aggregates of data according to the rules of the database management system being used.

The following describes the recirculating optical system previously introduced, which is intended for performing reservoir computing.

Reservoir computing is a computational approach in which an input signal is processed by the at least one reservoir of the system, the reservoir being a fixed dynamic structure arranged to transform the input signal into a high-dimensional internal representation. An output is then extracted from this representation by a readout layer, which may be implemented outside the optical system and is typically the only part of the overall system that is trained. In optical reservoir computing, the physical propagation of light through the reservoir inherently performs the dynamic transformation of the signal. The use of optics allows fast, parallel, and energy-efficient computation, which is particularly suited for tasks such as time-series prediction, pattern recognition, and classification.

The recirculating optical system comprises at least one reservoir. This means that the system may include a single reservoir, or alternatively a plurality of reservoirs connected together. When several reservoirs are present, they may be arranged in a cascade configuration, where the output of one reservoir feeds into the input of the next, or in a structure allowing mutual interaction, where light may circulate or couple between multiple reservoirs in both directions. The reservoirs included in the system may be identical in geometry and function, or they may differ in size, shape, coupling layout, or waveguide configuration depending on the computational architecture desired.

Each reservoir comprises at least two ports. By "port" is meant a physical interface of the reservoir through which an optical signal may enter or exit. Each port is typically implemented as a waveguide termination, either connected to an external optical circuit (such as a light source or a detector), or left accessible for coupling with other components. These ports are defined within the system as input ports and output ports. They enable optical signals to be introduced into the reservoir and extracted from it. The designation of a port as input or output is primarily defined by construction, depending on its physical position and function within the reservoir. However, in some configurations, the effective role of a port may also depend on how the system is operated, for example in cases involving reflection or bidirectional propagation. More generally, the one or more input ports and the one or more output ports may be defined among all the ports available in the set of reservoirs included in the system, depending on the overall topology and signal routing strategy. For example, in the case of reservoirs connected in cascade, the input ports may be located on the first reservoir of the cascade, and the output ports on the last one.

Each reservoir further comprises a set of waveguides connecting the at least two ports. A waveguide, in the context of the invention, is a physical structure designed to confine and guide light along a defined optical path. Waveguides may be straight, curved, or of any shape suitable for guiding light within the optical system. Each waveguide may have typical transverse dimensions, as defined as the size of the geometrical features, measured perpendicularly to the optical path, ranging from approximately 200 nanometers to 5 microns, curved waveguide exhibit locally radii of curvature ranging from approximately 10 microns up to 200 microns, depending on the optical mode confinement and fabrication constraints. The set of waveguides defines a network through which the optical signal can propagate, being guided from one port to another, possibly through intermediate paths, loops, or coupling regions.

The set of waveguides is arranged to form an interaction area and at least one recirculating area. The expression "arranged to form" is to be understood as meaning that the waveguides are positioned and connected together so as to define a network, wherein said network comprises at least one interaction area and at least one recirculating area as particular subregions.

The interaction area is a specific spatial region within the reservoir where at least three waveguides are brought into close proximity so as to enable optical interaction. Optical interaction here refers to the ability of light to couple from one waveguide to another via evanescent field overlap. When optical modes are strongly confined in their respective waveguides, their evanescent tails extend into the surrounding medium. If another waveguide is brought close enough, this "leakage" or "bleeding" of light allows a portion of the optical power to tunnel into the neighboring waveguide. In the interaction area, the waveguides are arranged such that, at least over a portion of their length, any pair of adjacent waveguides among the three or more involved is separated by a lateral distance enabling evanescent coupling, for example lower than 3 microns. The coupling region may extend over a length sufficient to allow significant optical interaction, for example over several hundred microns or up to a few centimeters, depending on the waveguide geometry and the desired coupling strength. This spatial arrangement enables continuous optical transfer between guides, where light propagating in one guide may partially enter the others depending on coupling coefficients and phase conditions.

For example, the at least three waveguides interacting together in the interaction area may be configured as, for example, straight waveguides arranged laterally and/or vertically relative to each other. The term "straight" here refers to the local geometry of the waveguides within the interaction area, meaning that the waveguides extend in a substantially linear fashion over the region where coupling occurs. The relative arrangement may be such that the waveguides are placed side-by-side in the same horizontal plane (lateral configuration), or in different vertical planes (stacked vertically), or in a combination of both. This three-dimensional flexibility in the layout allows for a variety of interaction geometries, depending on the fabrication platform and the optical behaviour desired. Such configurations may facilitate strong and simultaneous coupling between all three (or more) waveguides through evanescent field overlap, enhancing the complexity of the interaction dynamics in the reservoir.

In addition to the interaction area, each reservoir comprises at least one recirculating area. For example, each reservoir may comprise two recirculating areas, respectively arranged on either side of the interaction area. Each recirculating area includes at least one curved waveguide connecting extremities of waveguides from the interaction area. The extremities in this context refer to the ends of the waveguide segments involved in the interaction region. By connecting these extremities, the curved guide forms a closed or partially closed path that allows light to loop back into the interaction region after a delay. Each curved guide allows light to travel from one point of the interaction region to another, completing a circulation path. The geometry of each curved guide may vary depending on the system, but its essential function is to create a recirculating structure by linking waveguide ends so that light may re-enter the active region after propagation.

Multiple recirculating areas may be present within a reservoir, and different reservoirs in the system may comprise distinct configurations of such areas. The presence of these recirculating structures allows the signal to undergo multiple transformations as it circulates through the system, while remaining within the physical boundaries of the integrated optical structure. The combination of multiple propagating optical modes with spatial and temporal recirculation may contribute to the generation of complex dynamic behavior within the reservoir, which can be beneficial for performing reservoir computing tasks in the optical domain.

In examples, at least one of the at least one recirculating area may comprise at least two curved waveguides that are brought into close proximity so as to interact optically with each other. This configuration allows the recirculating area itself to support evanescent coupling between multiple curved guides, in addition to the interactions already taking place within the interaction area. The presence of optical interactions within the recirculating area may increase the modal complexity of the system, by introducing additional coupling paths or feedback loops. Depending on the geometry and spacing of the curved waveguides, light propagating in one curved guide may couple into another, allowing for more complex dynamic behaviour and richer internal resonance patterns within the reservoir.

In examples, the arrangement of the set of waveguides may be such that the waveguides are connected together to form a network supporting a set of optical modes. These optical modes may result from the constructive interference and coupling conditions defined by the geometry and spacing of the waveguides in the interaction area. Each optical mode may extend across multiple guides and may propagate along a closed or quasi-closed path within the network. In some configurations, each of these optical modes may pass through at least one recirculating area, for example by circulating through a curved waveguide connecting extremities of the guides involved in the interaction area. This ensures that the modes experience at least one feedback loop during propagation, which may enhance the dynamic behaviour and memory capacity of the reservoir.

In examples, the set of waveguides of the at least one recirculating area may be arranged to create a bi-directional propagation of light within the recirculating structure. In the context of the present disclosure, the term "create" is to be understood broadly, and may include configurations that support, enable, or cause such bi-directional propagation, whether actively or passively. For example, the physical continuity and symmetry of the waveguide layout, combined with the absence of unidirectional optical components, may allow light to circulate in both directions along the same optical path. In such configurations, the same curved waveguide may support light propagating clockwise and counter-clockwise, enabling interactions between counter-propagating modes or between successive wavefronts within the same reservoir.

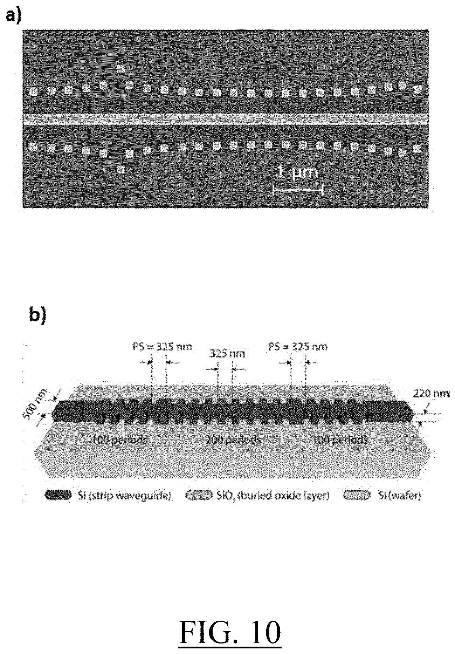

In examples, at least one (e.g., each) reservoir may comprise at least one partially or totally reflective element, such as a Bragg reflector. A Bragg reflector is a structure formed by either or both a periodic variation of the geometry or of the refractive index along an optical path, which causes constructive or destructive interference of light waves, thereby reflecting specific wavelengths while transmitting others. Illustrative but not limitative examples of integrated Bragg grating are shown in FIG. 10. In the context of the present system, a Bragg reflector may be implemented, for example, within a recirculating area to selectively reflect part of the optical signal while allowing another portion to continue propagating. The presence of such a reflective element may enable fine control over the resonance conditions of the optical modes circulating within the reservoir, or may serve to enhance certain nonlinear effects by increasing the effective interaction length. Depending on the design, the Bragg reflector may be used to define a partial optical cavity, to create a feedback loop, or to dynamically modulate the spectral response of the reservoir.

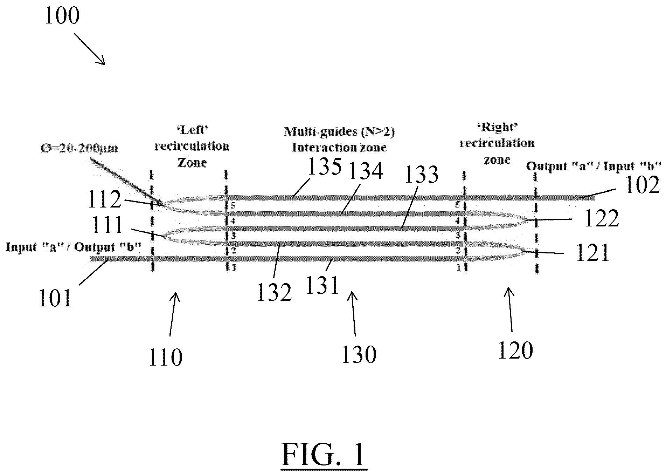

With reference to FIGs. 1 to 3, examples of reservoir that the recirculating optical system may comprise are now presented.

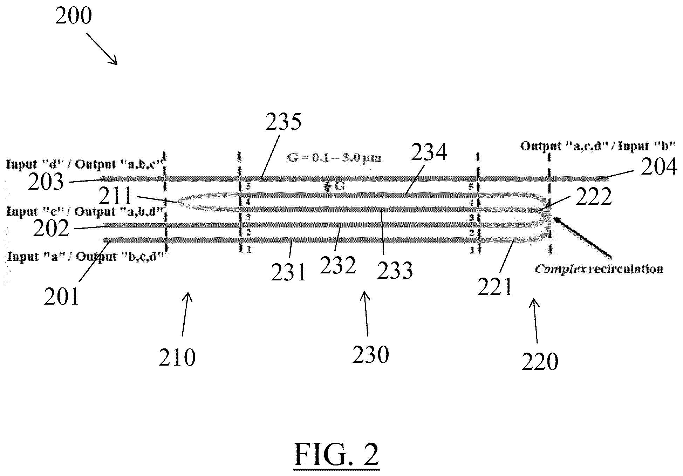

In particular, FIGs. 1 and 2 illustrate two examples of the reservoir, each comprising a left recirculation area and a right recirculation area. In both examples, the interaction area is positioned between the left and right recirculation areas. Each waveguide of the interaction area has a first end connected to a curved waveguide of the left recirculation area and a second end connected to a curved waveguide of the right recirculation area. This arrangement allows the optical signal to propagate through the interaction area while being coupled into and out of the adjacent recirculation areas.

In the first example of reservoir illustrated in FIG. 1, each of the left and right recirculation areas comprises two curved waveguides. In particular, the left recirculation area 110 comprises the two curved waveguides 111, 112, and the right recirculation area 120 comprises the two curved waveguides 121, 122. The interaction area 130 comprises a set of five straight waveguides 131, 132, 133, 134, 135 forming a continuous optical path between a first port 101 and a second port 102. A first straight waveguide 131 connects the first port 101 via the left recirculation area 110 to a first end of a first curved guide 121 in the right recirculation area 120. A second straight waveguide 132 connects the second end of this first curved guide 121 to a first end of a first curved guide 111 in the left recirculation area 110. A third straight waveguide 133 connects the second end of the first curved guide 111 in the left recirculation area 110 to a first end of a second curved guide 122 in the right recirculation area 120. A fourth straight waveguide 134 connects the second end of the second curved guide 122 in the right recirculation area 120 to a first end of a second curved guide 112 in the left recirculation area 110. Finally, a fifth straight waveguide 135 connects the second end of the second curved guide 112 in the left recirculation area 110 to the second port 102, passing again through the right recirculation area 120. This configuration creates a folded optical path alternating between the left and right recirculation areas through successive straight and curved segments.

When the recirculating optical system comprises only this single reservoir, the first port may serve as an input port, and the second port may serve as an output port. Alternatively, the system may comprise multiple reservoirs of this type, each arranged as illustrated in FIG. 1, and connected in cascade. In such a configuration, the second port of each reservoir may be connected to the first port of the next reservoir, thereby forming a sequence of interconnected reservoirs. In this case, the system as a whole comprises a single input port and a single output port: the input port is the first port of the first reservoir in the cascade, and the output port is the second port of the last reservoir in the cascade. This configuration allows the signal to propagate successively through multiple reservoirs, each contributing to the overall transformation applied to the signal within the system.

In the second example of reservoir illustrated in FIG. 2, the left recirculation area 210 comprises a single curved waveguide 211, while the right recirculation area 220 comprises two curved waveguides 221, 222. The interaction area 230 includes five straight waveguides connected as follows. A first straight waveguide 231 connects a first port 201 via the left recirculation area 210 to a first end of a first curved guide 221 in the right recirculation area 220. A second straight waveguide 232 connects a second port 202 via the left recirculation area 210 to a first end of a second curved guide 222 in the right recirculation area 220. A third straight waveguide 233 connects the second end of the second curved guide 222 in the right recirculation area 220 to a first end of the curved guide 211 in the left recirculation area 210. A fourth straight waveguide 234 connects the second end of the curved guide 211 in the left recirculation area 210 to the second end of the first curved guide 211 in the right recirculation area 220. A fifth straight waveguide 235 connects a third port 203 via the left recirculation area 210 to a fourth port 204 via the right recirculation area 220. In this configuration, the first and second curved waveguides 221, 222 of the right recirculation area 220 are placed in close proximity and may interact optically with each other, allowing evanescent coupling within the recirculating structure itself.

When the system comprises only the single reservoir illustrated in FIG. 2, one or more of the first three ports 201, 202, 203 may serve as input ports, and the fourth port 204 may serve as an output port. The selection of input ports may depend on the encoding scheme or the nature of the task to be performed. Alternatively, the system may comprise multiple reservoirs of this type connected together, for example in a cascade configuration. In such cases, the fourth port 204 of a given reservoir may be connected to one of the first three ports 201, 202, 203 of the next reservoir, depending on the desired interconnection scheme.

In another configuration, the system may comprise three reservoirs of this second type connected in parallel to a fourth reservoir of the same type. In such an arrangement, the three initial reservoirs may each receive distinct input signals or portions of a common input, and their respective output ports may be connected to three input ports of the fourth reservoir. The fourth reservoir then receives the optical signals produced by the preceding reservoirs and processes them jointly. This configuration enables distributed or parallel pre-processing followed by central integration or decision-making within a single reservoir. The input and output ports of the system may be defined based on the topology of the inter-reservoir connections and the functional roles assigned to each reservoir. As a result, the system may comprise one or more input ports and one or more output ports, selected among the ports of the various reservoirs, depending on the specific use case.

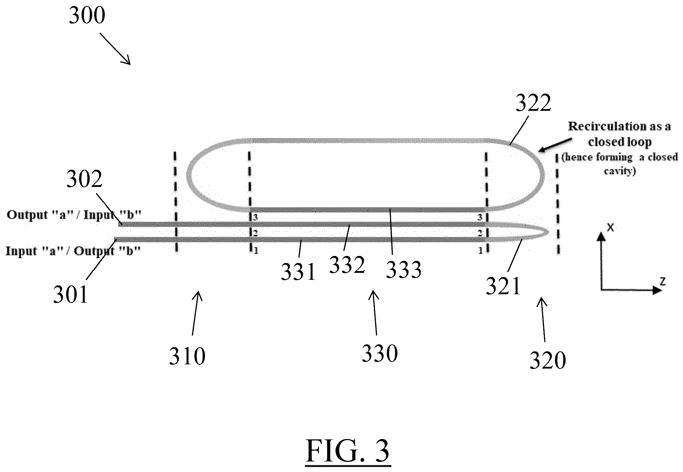

FIG. 3 illustrates a third example in which the reservoir comprises a single recirculation area 320, which is a right recirculation area. The interaction area 330 comprises three straight waveguides arranged as follows. A first straight waveguide 331 connects a first port 301, through a left area 310, to a first end of a curved guide 321 in the right recirculation area 320. A second straight waveguide 332 connects the second end of the same curved guide 321 to a second port 302, also via the left area 310. A third straight waveguide 333 has its two ends connected together via a curved guide 322 forming a closed loop, thereby defining an additional recirculation path. This configuration enables signal circulation within the structure even in the absence of a left recirculation area.

When the system comprises only the single reservoir illustrated in FIG. 3, the first port 301 may serve as an input port and the second port 302 may serve as an output port, or inversely depending on the desired signal direction. The optical signal may be injected through the first port 301, may be routed through the interaction area 330 and the curved guide 321 of the recirculation area 320, and may be extracted through the second port 302. Alternatively, the system may comprise multiple reservoirs of this type connected together, for example in a cascade configuration. In such cases, the second port 302 of a given reservoir may be connected to the first port 301 of the next reservoir in the sequence. The system as a whole may then comprise a single input port and a single output port, defined respectively as the first port 301 of the first reservoir and the second port 302 of the last reservoir in the cascade. This arrangement may enable successive optical processing stages, each performed by a respective reservoir, to be chained together in a compact and efficient configuration.

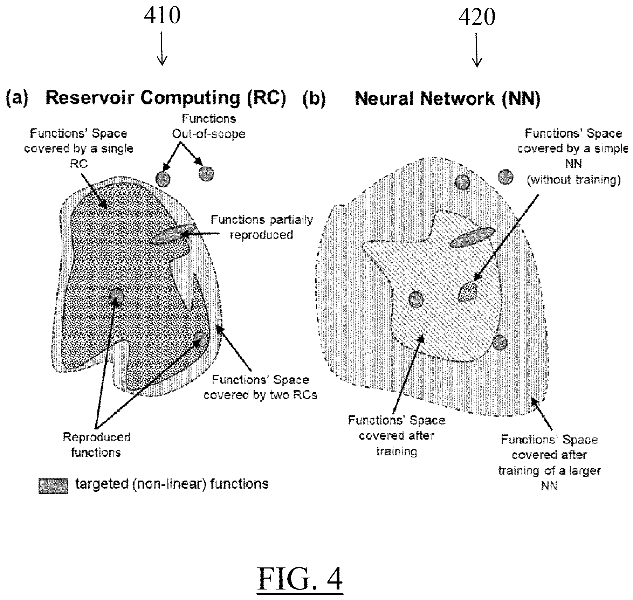

Further details of the invention are now provided with reference to FIGs. 4 to 13, which illustrate various non-limiting configurations and implementations of the recirculating optical system.

The invention relates to the field of integrated optical systems operating on a chip, in particular in the infrared spectral range between approximately 1.3 µm and 2.5 µm. Such systems may support multiple families of optical resonance modes and may exhibit nonlinear optical behavior characterized by hysteresis phenomena and dynamic switching between reflection and transmission regimes. Resonances are characterized by the fact that light can be stored up and concentrated in the reservoir to exhibit locally effective optical power density several times, typically hundred to ten million times, stronger than that of the input power. This enhances the nonlinear effects which become then strong enough to alter the resonances themselves. Hysteresis are characterized by the fact that the transmission and reflection properties of the reservoir, namely its current state, is influenced by its history, namely the energy it stored previously to any changes of the input signal. The invention may find application in the domain of advanced signal processing functions, in particular for artificial intelligence applications making use of photonic reservoir computing architectures.

To meet increasing demands for computational performance in tasks such as machine control, signal routing, shape recognition, or image processing, emerging architectures over the past decade have sought to gradually replace exact digital computations-typically performed on silicon-based processors-by approximate computations performed on neuromorphic hardware. While current computers may achieve relative computation precision in the range of 10⁻¹⁷ (e.g., 64-bit systems), not all tasks require such precision. Earlier generations of processors, such as those from the 1990s, provided only 8-bit precision (approximatively 0.5%) yet remained broadly useful. More generally, although binary computation has dominated since the development of the transistor, analog computation systems existed prior to that and implemented various algorithms suited to their continuous nature. Although analog systems may offer lower numerical precision, neuromorphic systems may provide significant advantages in terms of reduced power consumption and increased processing speed.

Among neuromorphic computing paradigms, reservoir computing (RC) represents a particular architecture that may be especially relevant for photonic systems. Training a multilayer neural network generally requires precise control over each node's parameters, which may be challenging in optical implementations. Reservoir computing offers an alternative by relying on a fixed, nonlinear system that intrinsically supports a wide range of dynamic behaviors. In such architectures, the desired function is extracted from the system by training only a simple readout layer, thus avoiding the need to intervene within the internal states of the reservoir.

FIG. 4 schematically illustrates how a reservoir computing system may cover a specific region of the functional space of nonlinear mappings. If the target function lies within that region, the reservoir may be able to reproduce it directly. FIG. 4(a) shows how cascading two existing RCs may only marginally increase the coverage of this space if the two RCs do not interact with each other. By contrast, FIG. 4(b) shows that traditional neural networks initially cover a very limited region but, after training, may reach a much wider range of functions, though this comes at the cost of exponential growth in required resources.

In optical RC systems, the signal encoding may be performed temporally (e.g., via successive pulses), spatially (e.g., via different channels), or spectrally (e.g., via distinct wavelengths). These encoding strategies may be used independently or in combination depending on the target application and system constraints. The computational complexity that may be achieved by such systems is typically linked to the dimensionality of the reservoir.

In existing solutions, a reservoir may perform better than a simple untrained neural network, but typically underperforms compared to large-scale trained networks. This may be due to the lack of internal training in most RC architectures, which limits task-specific adaptation, and to the fact that cascading two RCs generally leads to only a small improvement in system dimensionality, as the interaction between reservoirs is purely sequential.

Electric RCs, which initially demonstrated performance superior to untrained neural networks, have become less attractive due to advances in complex neural networks based on semiconductor technologies. These advanced neural networks may now be trained efficiently in the electrical domain, reducing the incentive to develop new electric RC systems. In the optical domain, however, training complex neural networks remains a challenge, and RCs may thus still provide a useful framework. Despite commercial availability of certain optical RC solutions, achieving high functional complexity remains a significant challenge.

In integrated photonics, most known optical RCs are based on coupled micro-ring resonator networks. While mature solutions may exist for the photonic input mask and digital readout stages, the photonic reservoir itself typically represents the most challenging part. In such architectures, the reservoir must allow the light to remain in the system for a finite time (i.e., sufficient temporal depth) and must exhibit sufficient optical nonlinearity. Known photonic reservoirs generally rely on resonant cavities, and more specifically on arrays of coupled micro-rings.

While variations exist in how these micro-ring resonators are connected, several key limitations remain. Firstly, larger reservoirs may include inaccessible or inactive cavities located at the center of the structure, which may reduce the correlation between system size and performance. Secondly, combining two RCs in series may only provide marginal performance gains, as the resulting system tends to operate sequentially rather than exhibiting mutual influence or cross-coupling between the reservoirs.

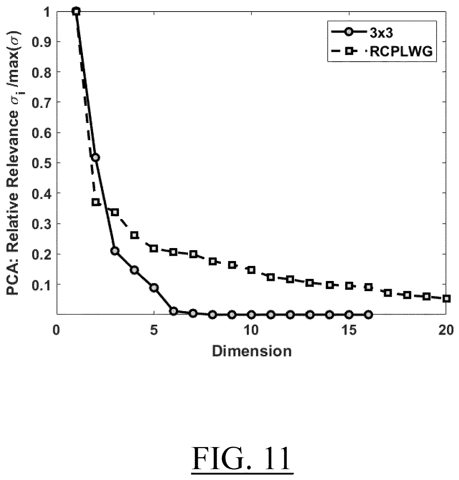

FIG. 11 illustrates these limitations by showing the principal component analysis of a regular 3 by3 square array of micro-resonators, hosting 9 resonances, and of a recirculating coupled waveguide (RCPLWG), hosting 5 resonances. The analysis shows micro ring configuration exhibits a sharper decrease of its PCA components, hence has a lower complexity despite having more resonances.

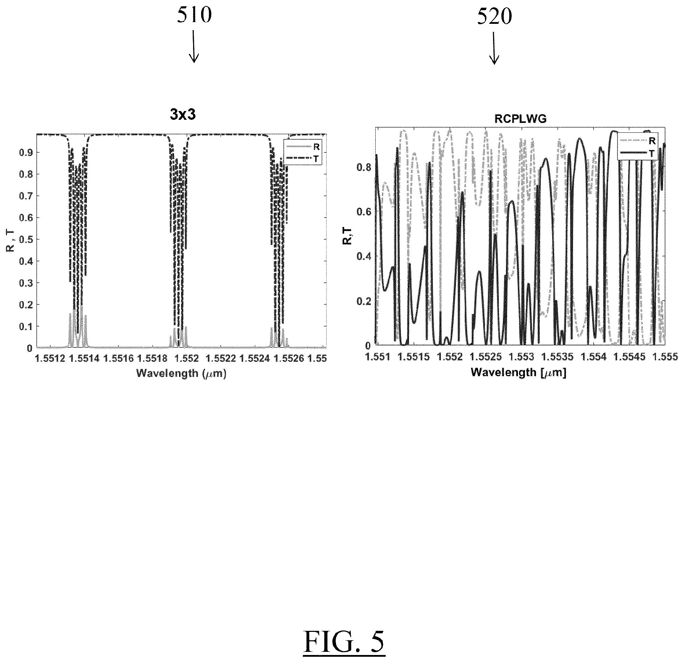

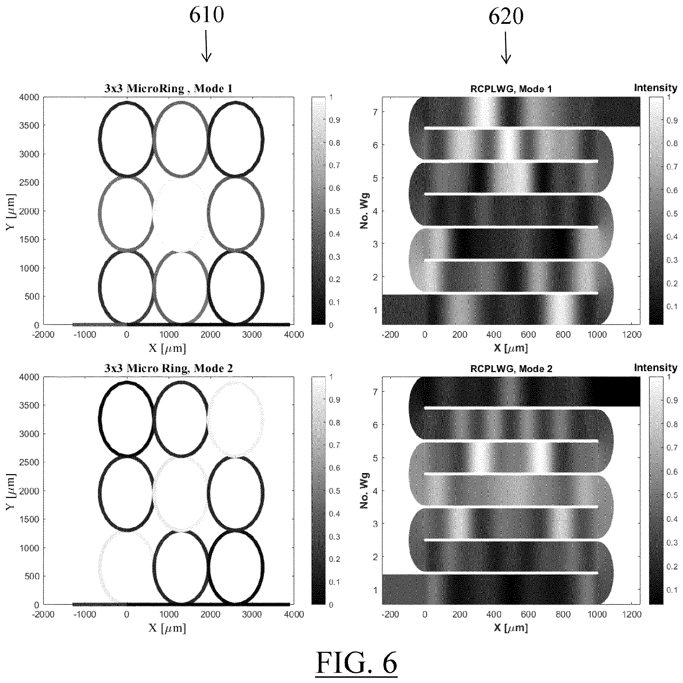

The invention described herein overcomes these limitations by enabling improved control and dynamic behavior through the use of recirculating waveguide structures. In the proposed system, resonance modes may be created in recirculation loops located at the periphery of the reservoir, thereby avoiding inaccessible internal elements. FIGs. 5 and 6 illustrate this aspect. In FIG. 5, transmission and reflection spectra are shown for both a traditional micro-ring matrix (510) and a recirculating waveguide implementation according to the invention (520). While nine resonance modes are theoretically possible, only five are clearly observable in the micro-ring configuration. In contrast the invention exhibits much more complexity. The apparent irregularity of the transmission and reflection spectra permit to access different working regimes of the RC by tuning the optical input central wavelength. FIG. 6 further shows that only a few cavities contribute significantly to each mode in the micro-ring case (610), whereas the recirculating structure according to the invention leads to a more distributed energy profile (620). In the 3×3 micro-ring system, each resonance is highly localized, with some rings contributing very little or not at all to certain resonant modes. By contrast, in the recirculating waveguide structure according to the invention, the energy distribution is more delocalized, with all waveguides participating significantly in each resonance. This spatial extension of the optical modes suggests that nonlinear interactions between modes may be enhanced in the recirculating configuration, thereby potentially increasing the system's computational richness and efficiency

In the system described herein, the ability to operate simultaneously in transmission and reflection leads to fundamentally different behavior when two reservoirs are cascaded. Unlike traditional configurations, the mutual interaction between cascaded reservoirs may enable new types of dynamic responses that are not possible in sequential-only architectures.

Further aspects of the invention, including structural configurations, material implementations, dimensional parameters, and fabrication strategies, are now detailed in the following sections.

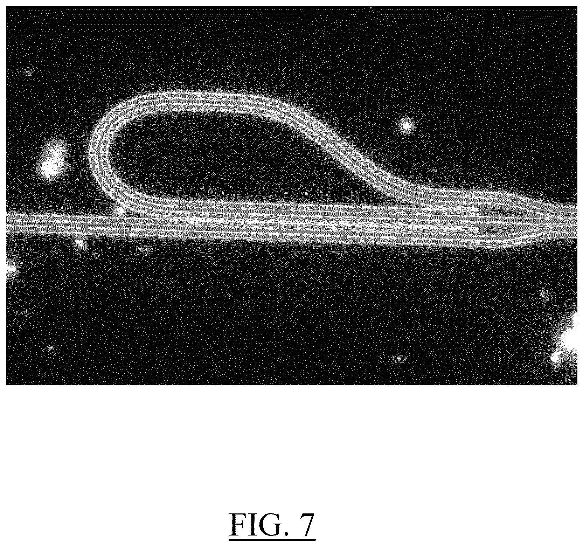

The system comprises at least one reservoir each comprising a central part formed by a network of coupled optical waveguides. This network may be arranged as illustrated schematically in FIGs. 1 to 3, and further represented in fabricated form in FIG. 7. The waveguides may have a generally rectangular cross-section, although other shapes may be considered. At each end of the waveguide network, recirculation areas may be formed by additional waveguides, which connect the extremities of the central network so as to redirect light from one end of the network to the other. This configuration may result in bidirectional light propagation. Such recirculating areas may also include Bragg gratings, such as those depicted in FIG. 10, which may function as integrated optical filters.

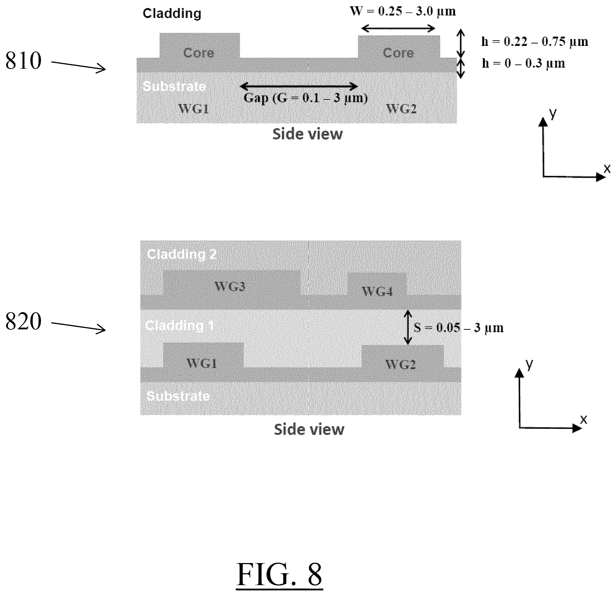

Certain ends of the waveguide network may serve as input or output ports, allowing light signals from external systems to be injected into the system or extracted from it. These external systems may be similar or different in design from the one described herein. The geometric characteristics of the waveguides, including parameters such as width and spacing (denoted W and G in FIG. 8), may vary depending on their lateral, vertical, or longitudinal position within the device. FIG. 8 shows two side views: one of a single-layer arrangement (810) of guides, and one illustrating a vertically stacked configuration (820) of guides.

The system may be modular and scalable. An input or output port of a given instance of the system may be connected to an input or output port of another instance, thus forming a larger computing structure. The waveguides within the central interaction area may be arranged laterally, vertically, or both, as illustrated in FIG. 8. Active control over waveguide properties may also be implemented. Such control may be achieved, for example, using integrated devices such as Variable Optical Attenuators (VOAs) or Phase Shifters (PSs). The recirculation areas may additionally include partially or fully reflective elements.

The invention may be operated in a nonlinear regime, where the optical response of the system depends on the input power level. Nonlinearities that may be exploited include, for example, the Kerr effect, two- or three-photon absorption, or dispersion and absorption effects related to free electron plasma.

The invention may be implemented using nanoribbon-type (h₂ = 0) or ridge-type (h₂ > 0) waveguides. These guides may include periodic structuring along the propagation axis (z), with a period below 2 µm. FIG. 10 shows an example of Bragg gratings that may be used in such implementations. The spacing between waveguides within the interaction area of each reservoir may range from approximately 100 nm to 3 µm.

The waveguide structures may be fabricated from semiconductor materials such as, but not limited to, Si (n ~ 3.44), AlₓGa₁₋ₓAs, GaAs (n ~ 3.37), Ga₁₋ₓInₓP (n ~ 3.17), InP (n ~ 3.14), GaP (n ~ 3.17), SiNₓ (n ~ 2.12), or TiO₂ (n ~ 2.3). The stoichiometric index "x" may vary between 0 and 1. The optical index "n" may be specified at a reference wavelength of 1.55 µm. In addition to operating in the wavelength band between 1.48 µm and 1.61 µm, the system may be designed to operate near 1.3 µm, 1.9 µm, or 2.4 µm, depending on the material and application.

The following tables present non-limiting examples of characteristic geometric dimensions for optical waveguides to be used in a recirculating optical system according to the invention. The values are based on numerical simulations performed for different materials and refractive indices, at several operating wavelengths. These simulations aim to identify suitable ranges for parameters of interest, such as waveguide height, width, and inter-guide gap (denoted G), which may be necessary for efficient coupling and integration. The minimum value for the gap G between two adjacent waveguides may be constrained by current technological limitations, and is typically set to 0.1 µm.

The data is organized according to the refractive index used to fabricate the waveguides. Table 1 would then correspond to silicon (n ~ 3.44), Table 2 to silicon nitride with high nitrogen content ("N-rich" SiN, n ~ 1.8), Table 3 to silicon nitride with low nitrogen content ("Si-rich" SiN, n ~ 2.4), and Table 4 to tantalum pentoxide (Ta₂0₅, n ~ 2.06). Each table reports the height, width, and gap ranges for waveguides operating at selected wavelengths (1.3 µm, 1.55 µm, 1.9 µm, and 2.4 µm). These values may be used as design guidelines for implementing recirculating optical systems according to the invention, for example in the near- and mid-infrared spectral ranges.

**Table 1: Silicium (n ~ 3.44)**

| **Wavelength [µm]** | **Height [µm]** | **Width W [µm]** | **Gap [µm]** |
|---|---|---|---|
| 1.3 | 0.220 - 0.340 | 0.25 - 0.6 | 0.9 - 0.1 |
| 1.55 (C-Band) | 0.220 - 0.340 | 0.35 - 0.8 | 0.9 - 0.1 |
| 1.9 | 0.220 - 0.340 | 0.4 - 1.0 | 2.2 - 0.1 |
| 2.4 | 0.220 - 0.340 | 0.6 - 1.2 | 2-0.1 |

**Table 2: SiN , "N-rich" (n ~ 1.8)**

| **Wavelength [µm]** | **Height [µm]** | **Width W [µm]** | **Gap [µm]** |
|---|---|---|---|
| 1.3 | 0.75 | 0.5 - 1.8 | 0.9 - 0.1 |
| 1.55 (C-Band) | 0.75 | 1.0 - 2.1 | 0.9 - 0.1 |
| 1.9 | 0.75 | 1.4 - 2.4 | 2.2 - 0.1 |
| 2.4 | 0.75 | 1.9 - 3.0 | 2-0.1 |

**Table 3: SiN , "Si-rich" (n ~ 2.4)**

| **Wavelength [µm]** | **Height [µm]** | **Width W [µm]** | **Gap [µm]** |
|---|---|---|---|
| 1.3 | 0.75 | 0.4 - 0.6 | 2.5 - 0.1 |
| 1.55 (C-Band) | 0.75 | 0.4 - 0.8 | 1.2 - 0.1 |
| 1.9 | 0.75 | 0.4 - 1.2 | 1.3 - 0.1 |
| 2.4 | 0.75 | 0.4 - 1.4 | 2.3 - 0.1 |

**Table 4: Ta₂0₅ (n ~ 2.06)**

| **Wavelength [µm]** | **Height [µm]** | **Width W [µm]** | **Gap [µm]** |
|---|---|---|---|
| 1.3 | 0.57 | 0.4 - 1.1 | 2.5 - 0.1 |
| 1.55 (C-Band) | 0.57 | 0.4 - 1.3 | 1.2 - 0.1 |
| 1.9 | 0.57 | 0.8 - 1.8 | 1.3 - 0.1 |
| 2.4 | 0.57 | 1.2 - 2.4 | 2.0-0.1 |

These dimensions may changes depending on the refractive index of the substrate and of the cladding. The waveguides may be fabricated on a substrate (e.g., in silica) and surrounded by a cladding layer, both of which may have a refractive index lower than that of the core waveguides. The substrate and cladding may be composed of the same or different materials. Preferred values for the refractive index of the cladding and substrate may fall within the range of 1.00 to 2.20 at the operational wavelength.

As shown in FIG. 8, the vertical dimensions of the waveguides (denoted "h") may fall between approximately 150 nm and 750 nm. The widths "W" may typically range from 250 nm to 3000 nm. In vertically stacked configurations, the separation between waveguide layers may be between 50 nm and 3000 nm. The invention may preferably involve no more than three vertically stacked layers of waveguides, as illustrated in FIG. 8.

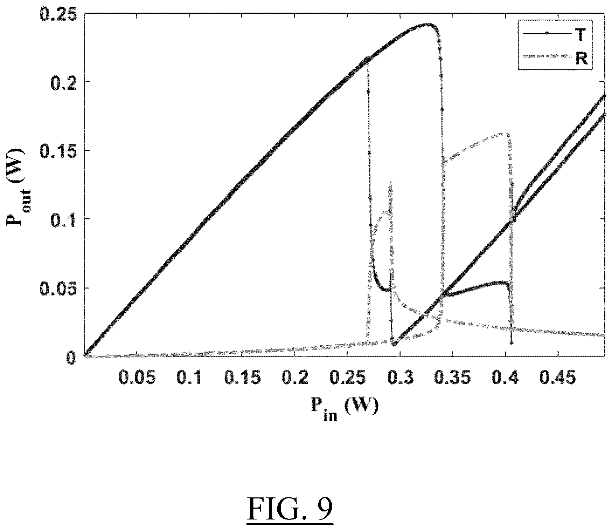

The invention has notably been tested through theoretical and numerical analyses. Theoretical modeling has demonstrated the possibility of simultaneous reflection and transmission behavior, as well as unique mutual interactions when two reservoirs are cascaded. Numerical simulations have shown that the nonlinear response of the recirculating RC structure may be comparable to that of known micro-ring resonator systems. Indeed the recirculating RC exhibits similar quality factor and also similar effective mode volume to that of micro-ring resonators, and therefore about the same intrinsic nonlinearity and nonlinear threshold. Simulations based on the Kerr effect demonstrate switching between reflective and transmissive behavior, as illustrated in FIG. 9.

Experimental fabrication has also been successfully carried out to validate the feasibility of the structure. FIG. 7 shows an optical microscope image of a fabricated structure, including a recirculation area and an input/output waveguide. The start of a three-waveguide coupled region may be seen on the right-hand side of the image.

Potential applications of the invention may include reservoir computing for analog signal processing on integrated photonic platforms. Additional uses may include all-optical functions such as nonlinear switching or nonlinear filtering for laser systems (e.g., NOLM configurations).

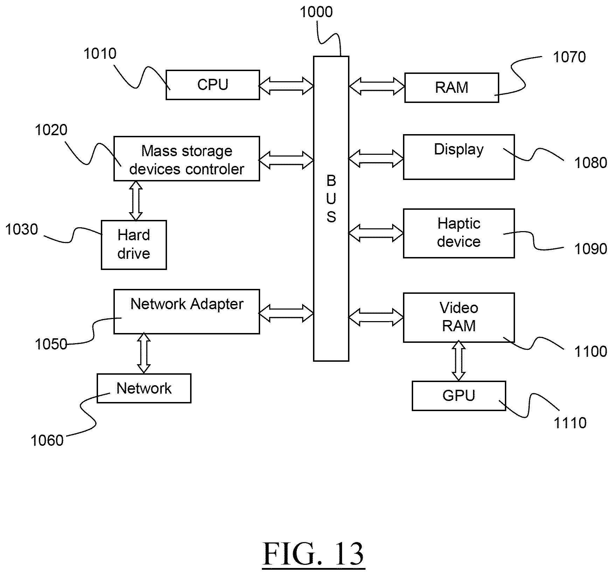

FIG. 13 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A recirculating optical system for performing reservoir computing, the recirculating optical system comprising at least one reservoir, each reservoir comprising:
• at least two ports; and
• a set of wave guides connecting the at least two ports,
wherein the set of wave guides is arranged to form:
∘ an interaction area comprising at least three guides interacting together; and
∘ at least one recirculating area comprising at least one curved guide connecting extremities of guides from the interaction area.

2. The system according to claim 1, wherein the arrangement of the set of wave guides connected together results in a formation of optical modes, each optical mode passing through at least one recirculating area.

3. The system according to claim 1 or 2, wherein the set of wave guides is arranged to create a bi-directional propagation of light.

4. The system according to any one of claims 1 to 3, wherein the at least three guides interacting together in the interaction area are configured as guides arranged laterally and/or vertically relative to each other.

5. The system according to any one of claims 1 to 4, wherein the spacing between each pair of adjacent guides in the interaction area is lower than 3 microns.

6. The system according to any one of claims 1 to 5, wherein at least one of the at least one recirculating area comprises at least two curved guides interacting together.

7. The system according to any one of claims 1 to 6, wherein at least one reservoir comprises at least one partially or totally reflective element, for example such as a Bragg reflector.

8. The system according to any one of claims 1 to 8, wherein the at least one recirculating area comprises:
• a left recirculation area; and
• a right recirculation area,
wherein the interaction area is positioned between the left and right recirculation areas, each guide of the interaction area having a first end connected to a curved guide of the left recirculation area and a second end connected to a curved guide of the right recirculation area.

9. The system according to claim 8, wherein each recirculation area comprises two curved guides, the interaction area comprising:
• a first straight guide connecting a first port via the left recirculation area and a first end of a first curved guide in the right recirculation area;
• a second straight guide connecting a second end of the first curved guide in the right recirculation area and a first end of a first curved guide in the left recirculation area;
• a third straight guide connecting a second end of the first curved guide in the left recirculation area and a first end of a second curved guide in the right recirculation area;
• a fourth straight guide connecting a second end of the second curved guide in the right recirculation area and a first end of a second curved guide in the left recirculation area; and
• a fifth straight guide connecting a second end of the second curved guide in the left recirculation area and a second port via the right recirculation area.

10. The system according to claim 8, wherein the left recirculation area comprises a curved guide and the right recirculation area comprises two curved guides, the interaction area comprising:
• a first straight guide connecting a first port via the left recirculation area and a first end of a first curved guide in the right recirculation area;
• a second straight guide connecting a second port via the left recirculation area and a first end of a second curved guide of the right recirculation area;
• a third straight guide connecting a second end of the second curved guide in the right recirculation area and a first end of a first curved guide in the left recirculation area;
• a fourth straight guide connecting a second end of the first curved guide in the left recirculation area and a second end of the first curved guide in the right recirculation area; and
• a fifth straight guide connecting a third port via the left recirculation area and a fourth pot via the right recirculation area,
wherein the first and second curved guides in the right recirculation area interact together.

11. The system according to any one of claims 1 to 8, wherein the at least one recirculating area consists in a right recirculation area, the interaction area comprising:
• a first straight guide connecting a first port via a left area and a first end of a first curved guide in the right recirculation area;
• a second straight guide connecting a second end of the first curved guide in the right recirculation area and a second port via the left area; and
• a third straight guide having ends connected together as a closed loop by a recirculation guide.

12. The system according to any one of claims 1 to 9, wherein the optical recirculation system comprises several reservoirs connected in pairs, with the port of one reservoir connected to the port of the other reservoir.

13. A method of use of a recirculating optical system according to any one of claims 1 to 12, the method comprising:
• determining an input signal to be supplied to the recirculating optical system;
• supplying the determined input signal as input to the recirculating optical system; and
• interpreting a response provided by the recirculating optical system.

14. A computer program comprising instructions which, when the program is executed by a computer, cause the computer to carry out the method of claim 13.

15. A device comprising a data storage medium having recorded thereon the computer program of claim 14, the device optionally comprising a processor coupled to the data storage medium.
